# EUROPÄISCHE PATENTSCHRIFT

(11) **EP 4 321 293 B1**
(45) Veröffentlichungstag und Bekanntmachung des Hinweises auf die Patenterteilung: **10.12.2025**
(21) Anmeldenummer: 22189781.2
(22) Anmeldetag: 10.08.2022
(51) Int. Cl.: B23Q 3/10, B23Q 1/28, B23Q 3/06, B25B 1/24, F16B 2/12, F16B 2/18, B25B 5/08, F16B 23/00, F16B 35/06

(54) **SPANNVORRICHTUNG ZUR BEFESTIGUNG EINER BEWEGBAREN HALTEVORRICHTUNG UND VERWENDUNG EINER SPANNVORRICHTUNG**
CLAMPING DEVICE FOR FIXING A MOVABLE HOLDING DEVICE AND USE OF A CLAMPING DEVICE
DISPOSITIF DE SERRAGE DESTINÉ À LA FIXATION D'UN DISPOSITIF MOBILE DE MAINTIEN ET UTILISATION D'UN DISPOSITIF DE SERRAGE

(43) Veröffentlichungstag der Anmeldung: 14.02.2024
(73) Patentinhaber: Hoffmann Engineering Services GmbH, 81241 München (DE)
(72) Erfinder: ROSSAINT, Jens, 82152 Krailling (DE); FEICHTINGER, Michael, 86579 Waidhofen (DE)
(74) Vertreter: Seemann & Partner Patentanwälte mbB

(56) Entgegenhaltungen:
- DE-A1- 3 437 260
- FR-A1- 2 175 687
- US-A1- 2003 029 285

## Beschreibung

Die Erfindung betrifft eine Spannvorrichtung zur Befestigung einer bewegbaren Haltevorrichtung, insbesondere eines Schraubstocks, an einem eine Nut, insbesondere eine T-Nut, aufweisenden Maschinentisch einer Materialbearbeitungsmaschine, insbesondere einer Werkzeugmaschine.

Ferner betrifft die Erfindung einen Maschinentisch einer Materialbearbeitungsmaschine, insbesondere einer Werkzeugmaschine, mit einer Spannvorrichtung und mindestens einer Nut zur Aufnahme des Nutensteins der Spannvorrichtung.

Ferner betrifft die Erfindung die Verwendung einer Spannvorrichtung zum Befestigen einer beweglichen Haltevorrichtung, insbesondere eines Schraubstocks, an einem eine Nut, insbesondere eine T-Nut, aufweisenden Maschinentisch einer Materialbearbeitungsmaschine, insbesondere einer Werkzeugmaschine.

Bei der mechanischen Bearbeitung eines Werkstücks, beispielsweise beim Bohren mit einer Ständerbohrmaschine oder bei der Bearbeitung mit einer Fräsmaschine, wird das Werkstück in der Regel mittels eines Schraubstocks eingespannt. Auf diese Weise ist das Werkstück während der Bearbeitung unbeweglich, so dass weder das Werkstück noch die Maschine durch unkontrollierte Bewegungen des Werkstücks beschädigt noch die bedienende Person verletzt wird. Zur Fixierung des Werkstücks bei der Bearbeitung dienen Haltevorrichtungen, insbesondere Schraubstöcke oder Maschinenschraubstöcke. Eine zusätzliche Anforderung ist die Positionierbarkeit der Haltevorrichtung, so dass das Werkstück angepasst an die Geometrie der Maschine, beispielsweise ausgerichtet auf eine feste Bohrachse, positioniert wird.

Für eine stabile Fixierung wird die Haltevorrichtung, insbesondere der Schraubstock, am Maschinentisch der Werkzeugmaschine befestigt. Hierzu weisen übliche Maschinentische Nuten für Nutensteine, häufig T-förmige Nuten für T-förmige Nutensteine, auf. Ein Schraubstock ist beispielsweise an einem entsprechenden Maschinentisch fixierbar, indem er mittels Schrauben mit einem oder mehreren Nutensteinen verspannt wird. Eine alternative Befestigung ist die Verwendung von Spannpratzen. Hierzu werden die Spannpratzen als Klemmen auf den Schraubstock aufgebracht und mittels einer Schraube im Nutenstein befestigt. Für diese Arten der Befestigung ist Werkzeug, beispielsweise ein Schraubendreher, erforderlich und weiterhin dauert eine solche Befestigung in der Regel mindestens einige Sekunden.

Ferner ist aus DE 20 2018 100 586 U1 ein System zum Unterstützen beim Spannen eines Werkstücks auf insbesondere einem mit Klemmnuten und insbesondere T-Nuten ausgerüsteten Maschinentisch einer Werkzeugmaschine, wie z.B. einer Bohrmaschine, bekannt.

DE 34 37 260 A1 offenbart Ausführungsformen von Positionierkörpern, die insbesondere an Kreuzungsstellen von T-Nuten einer Spannpalette montiert und justiert sind.

Außerdem offenbart US 2003/0029285 A1 eine Drehbank mit einem Drehmaschinenbett und einer Führungsbahn. In der Führungsbahn kann eine Werkzeugauflage und/oder ein Reitstock angeordnet werden.

Ferner beschreibt FR 2 175 687 A1 eine schwingungsdämpfende Führungsvorrichtung für eine Werkstück-Bearbeitung auf Fräsmaschinen mit langen Wellen.

Eine Aufgabe der Erfindung besteht darin, eine Haltevorrichtung für die Befestigung eines Werkstücks zur Bearbeitung mit einer Materialbearbeitungsmaschine auf einfache Weise schnell und stabil an der Materialbearbeitungsmaschine zu befestigen.

Diese Aufgabe wird gelöst durch eine Spannvorrichtung zur Befestigung einer bewegbaren Haltevorrichtung, insbesondere eines Schraubstocks, an einem eine Nut, insbesondere eine T-Nut, aufweisenden Maschinentisch einer, insbesondere stationären, Materialbearbeitungsmaschine, insbesondere Werkzeugmaschine, mit einem, insbesondere T-förmigen, Nutenstein zur Anordnung in der Nut, insbesondere der T-Nut, des Maschinentischs und mit einem Exzentermechanismus zum Verspannen des Nutensteins, wobei bei Betätigung des Exzentermechanismus der Nutenstein in der Nut, insbesondere der T-Nut, bewegbar und/oder verspannbar ist,
wobei der Exzentermechanismus eine eine Drehachse aufweisende Exzenterwelle und einen an der Exzenterwelle exzentrisch angeordneten Exzenterbolzen aufweist, wobei der Nutenstein mittels einer Drehbewegung der Exzenterwelle in der Nut, insbesondere T-Nut, verspannbar ist,
wobei die Spannvorrichtung einen mit dem Nutenstein und mit dem Exzenterbolzen verbundenen Nutensteinbolzen zum Bewegen und Verspannen des Nutensteins aufweist, wobei mittels einer Drehbewegung der Exzenterwelle der Nutensteinbolzen queraxial zur Drehachse der Exzenterwelle bewegbar ist,
wobei der Exzentermechanismus eine zwangsgeführte Axialführung für den Nutensteinbolzen aufweist und der Nutensteinbolzen durch die Axialführung linear geführt ist, wobei die Axialführung queraxial zur Drehachse der Exzenterwelle ausgebildet ist,
wobei der Nutensteinbolzen eine Aufnahmeöffnung zur Aufnahme des Exzenterbolzens aufweist, wobei die Aufnahmeöffnung als Langloch mit Längserstreckung ausgeführt ist,
wobei der Nutensteinbolzen eine Längsachse aufweist, wobei die Längserstreckung der Aufnahmeöffnung queraxial, insbesondere senkrecht, zur Längsachse des Nutensteinbolzens verlaufend ist.

Der Grundgedanke der Erfindung besteht darin, dass ein Schraubstock mittels eines Nutensteins mit dem Maschinentisch verspannt wird. Diese Verspannung erfolgt durch die Betätigung eines Exzentermechanismus und erfolgt dadurch schnell und präzise. Der Exzentermechanismus ermöglicht eine sehr schnelle Befestigung sowie ein schnelles Lösen der Verbindung, um die Haltevorrichtung zu bewegen und an einer anderen Position erneut zu fixieren. Die Fixierung mittels nur eines Nutensteins ermöglicht eine sehr flexible Positionierung der Haltevorrichtung auf der ganzen zweidimensionalen Fläche des Maschinentischs. Vorzugsweise ist die Nut des Maschinentischs als umgekehrte T-förmige Nut ausgebildet. Entsprechend ist insbesondere der Nutenstein als umgekehrter T-förmiger Nutenstein ausgebildet.

Ein weiterer Vorteil der Erfindung besteht darin, dass mittels einer erfindungsgemäßen Spannvorrichtung ein Maschinenschraubstock mit dem erfindungsgemäßen Exzentermechanismus nachgerüstet werden kann. Dies ermöglicht den flexiblen Einsatz von Werkzeug und ist gleichermaßen ressourcenschonend.

Weiterhin ist vorteilhaft, dass sehr schnelles Spannen die Akzeptanz bei den bedienenden Personen erhöht und dadurch die Sicherheit bei der Benutzung der Materialbearbeitungsmaschine zuverlässig gewährleistet.

Im Rahmen der Erfindung wird unter einer Materialbearbeitungsmaschine u.a. auch eine Werkzeugmaschine wie z.B. eine Fräsmaschine oder Drehmaschine etc. für die Metallbearbeitung sowie eine Maschine zur Bearbeitung von anderen Materialien, wie z.B. eine Tischbohrmaschine für Holz oder eine Holzbearbeitungsmaschine verstanden. Vorzugsweise ist die Materialbearbeitungsmaschine als stationäre Maschine ausgebildet.

Eine erfindungsgemäße bewegbare Haltevorrichtung ist insbesondere ein Schraubstock. Bewegbar ist insbesondere eine Haltevorrichtung, die auf einem flachen und/oder horizontal ausgerichteten Maschinentisch flexibel positionierbar ist. Eine Änderung der Position der Haltevorrichtung auf dem Maschinentisch mit geringem Aufwand ermöglicht flexiblen und schnellen Einsatz der Materialbearbeitungsmaschine. Der eine Nut aufweisende Maschinentisch einer Materialbearbeitungsmaschine ist insbesondere als Nutensteinplatte ausgebildet.

Erfindungsgemäß ist der Nutenstein zur Anordnung in der Nut des Maschinentischs vorgesehen, wobei bei Betätigung des Exzentermechanismus der Nutenstein in der Nut bewegbar und/oder verspannbar ist. Insbesondere ist der Nutenstein senkrecht zur Oberfläche des Maschinentischs bewegbar und wird insbesondere nach kurzer Bewegung mit dem der Oberfläche des Maschinentischs zugewandten Teil der Nut verspannt. Im unverspannten Zustand ist der Nutenstein innerhalb einer Nut mittels einer manuellen Betätigung frei positionierbar. Der Nutenstein ist insbesondere als T-Nutenstein ausgebildet und/oder die Nut des Maschinentischs ist insbesondere als umgedrehte T-Nut ausgebildet. Gleichermaßen sind andere Formen für Nuten und komplementäre Formen für Nutensteine erfindungsgemäß.

Erfindungsgemäß weist der Exzentermechanismus eine eine Drehachse aufweisende Exzenterwelle und einen an der Exzenterwelle exzentrisch angeordneten Exzenterbolzen auf, wobei der Nutenstein mittels einer Drehbewegung der Exzenterwelle in der Nut, insbesondere T-Nut, verspannbar ist. In einer bevorzugten Ausführungsform ist die Exzenterwelle parallel zum Maschinentisch angeordnet. In einer bevorzugten Ausführungsform bewirkt die Drehbewegung der Exzenterwelle eine im Wesentlichen translatorische Bewegung des Nutensteins in der Nut und dadurch dessen Verspannung.

Erfindungsgemäß weist die Spannvorrichtung einen mit dem Nutenstein und mit dem Exzentermechanismus, insbesondere mit dem Exzenterbolzen, verbundenen Nutensteinbolzen zum Bewegen und Verspannen des Nutensteins auf, wobei mittels einer Drehbewegung der Exzenterwelle der Nutensteinbolzen queraxial zur Drehachse der Exzenterwelle bewegbar ist. Der Nutensteinbolzen verbindet den Nutenstein und den Exzentermechanismus und überträgt die Bewegung der betätigbaren oder betätigten Exzenterwelle auf den Nutenstein, wobei vorzugsweise der Nutenstein und der damit verbundene Nutensteinbolzen eine lineare Bewegung ausführen. In einer bevorzugten Ausführungsform ist der Nutensteinbolzen eine Gewindestange und/oder ein Bolzen mit einem Außengewinde. Bevorzugterweise ist der Nutensteinbolzen an einem Ende einschraubbar in den Nutenstein. Insbesondere ist der Abstand von Exzentermechanismus und Nutenstein mittels der Länge des eingeschraubten Teils des Nutensteinbolzens einstellbar.

Ferner zeichnet sich die Spannvorrichtung dadurch aus, dass die Exzenterwelle gegenüber einem nicht verspannten Zustand in einem Winkelbereich von 0° bis 360°, insbesondere in einem Winkelbereich von 0° bis 200°, insbesondere in einem Winkelbereich von 0° bis 180°, drehbar ist. Dabei ist die Position bei 0° die Rotationsstellung der Exzenterwelle, bei der der Nutenstein nicht verspannt ist und einen maximalen Abstand zu einer Kontaktfläche der Nut für den Nutenstein aufweist, wodurch ein Winkel von 0° einem entspannten Zustand der Exzenterwelle entspricht. In einer anderen Ausführungsform ist die Exzenterwelle vollständig rotierbar, also in einem Winkelbereich von 0° bis 360°, und in einer weiteren Ausführungsform ist der Winkelbereich eingeschränkt. Dies ermöglicht beispielsweise Vereinfachungen in der Konstruktion. Die Rotationsstellung der Exzenterwelle, bei der der Nutenstein einen minimalen Abstand zu der Kontaktfläche der Nut für den Nutenstein aufweist und bei der im Vergleich mit anderen Rotationsstellungen die auf den Nutenstein wirkende Verspannkraft maximal ist, liegt in einer Ausführungsform der Position bei 0° gegenüber und befindet sich bei einer Rotationsstellung der Exzenterwelle von 180°.

Vorzugsweise zeichnet sich die Spannvorrichtung dadurch aus, dass der Nutenstein durch eine Drehbewegung der Exzenterwelle gegenüber einem nicht verspannten Zustand um 80° bis 200°, insbesondere um 90° bis 180°, verspannbar ist. Insbesondere ist einer bevorzugten Ausführungsform der Nutenstein im Winkelbereich von 0° bis 80° bzw. von 0° bis 90° nicht verspannbar, wobei in diesem Winkelbereich der Nutenstein in der Nut beweglich bleibt. Dies ermöglicht einerseits eine stabile Fixierung durch Verklemmen (im Winkelbereich 80° bis 200° bzw. 90° bis 180°) und andererseits eine variable Positionierung (im Winkelbereich 0° bis 80° bzw. 90°), in dem der Nutenstein nicht verspannt ist. In einer bevorzugten Ausführungsform ist im Vergleich mit anderen Rotationsstellungen die auf den Nutenstein wirkende Verspannkraft bei einer Positionierung bei 180° maximal. Insbesondere ist bei dieser Positionierung der Abstand zu einer Kontaktfläche der Nut für den Nutenstein minimal. In einer anderen Ausführungsform ist es vorteilhaft, dass die Drehbewegung der Exzenterwelle auf zwischen 0° und 200° bzw. auf zwischen 0° und 180° eingeschränkt ist. In einer weiteren Ausführungsform ist der Nutenstein in anderen Winkelbereichen verspannbar, beispielsweise größeren Winkelbereichen oder kleineren Winkelbereichen als oben genannt.

Vorzugsweise ist die Spannvorrichtung in einem Aspekt dadurch weitergebildet, dass der Exzenterbolzen eine Exzentrizität gegenüber der Drehachse der Exzenterwelle zwischen 0.2 mm und 6 mm, insbesondere zwischen 0.5 mm und 4 mm, aufweist. Die Exzentrizität ist der Abstand von Exzenterbolzen und Mitte der Drehachse der Exzenterwelle. Die Exzentrizität des Exzenterbolzens ist vorzugsweise zu den Abmessungen von Materialbearbeitungsmaschinen und/oder zugehörigen mit Nuten, insbesondere T-Nuten, versehenen Maschinentischen angepasst ausgebildet. Gemäß einer bevorzugten Ausführungsform beträgt die Hublänge des mit dem Exzenterbolzen verbundenen Nutensteinbolzens die zweifache Exzentrizität.

Gemäß einer bevorzugten Ausführungsform zeichnet sich die Spannvorrichtung dadurch aus, dass der Nutenstein und/oder der Nutensteinbolzen und/oder der Exzentermechanismus aus Metall, insbesondere Stahl, insbesondere gehärtetem Stahl, hergestellt sind. Eine Herstellung aus den genannten Materialien ist vorteilhaft, denn Komponenten aus diesen Materialien sind stabil und langlebig und weisen mechanische Eigenschaften, wie beispielsweise Elastizität, auf, welche dem Einsatz beim Verspannen angepasst sind.

Gemäß der Erfindung ist vorgesehen, dass der Exzentermechanismus eine zwangsgeführte Axialführung für den Nutensteinbolzen aufweist und der Nutensteinbolzen durch die Axialführung axial, insbesondere linear, geführt ist, wobei die Axialführung queraxial zur Drehachse der Exzenterwelle ausgebildet ist. Die Axialführung für den Nutensteinbolzen bewirkt eine lineare Führung, wodurch ein Verkippen oder ein Verklemmen des Nutensteinbolzens während der Verspannbewegung des Nutensteins verhindert wird, obwohl aufgrund des Exzentermechanismus entsprechende Kräfte auf den Nutensteinbolzen wirken. Insbesondere bewirkt die Axialführung eine lineare Bewegung des Nutensteinbolzens queraxial zur Drehachse der Exzenterwelle und insbesondere senkrecht zum Maschinentisch. Dies unterstützt ein stabiles Verklemmen des Nutensteins mittels einer linearen Bewegung des Nutensteinbolzens und verhindert eine seitliche Relativbewegung zwischen Schraubstock und Maschinentisch während des Spannvorgangs.

Erfindungsgemäß weist der Nutensteinbolzen eine Aufnahmeöffnung zur Aufnahme des Exzenterbolzens auf, wobei die Aufnahmeöffnung als Langloch mit Längserstreckung ausgeführt ist. Die als Langloch ausgebildete Aufnahmeöffnung des Nutensteinbolzens ermöglicht eine Querbewegung des Exzenterbolzens senkrecht zur Längsachse des Nutensteinbolzens, ohne dass der Nutensteinbolzen verkippt wird. Dies ermöglicht die Umsetzung einer Rotationsbewegung der Exzenterwelle mittels des Exzentermechanismus in eine rein translatorische Bewegung des Nutensteinbolzens. Unterstützt wird dies durch eine Axialführung, die vorangehend beschrieben ist. Insbesondere ist die Längserstreckung des Langlochs parallel zur Oberfläche des Maschinentischs sowie senkrecht zur Bewegungsrichtung des linear geführten Nutensteinbolzens und zur Bewegungsrichtung des mit dem Nutensteinbolzen bewegten Nutensteins bei Betätigung des Exzentermechanismus ausgebildet.

Gemäß der Erfindung weist der Nutensteinbolzen eine Längsachse auf, wobei die Längserstreckung der Aufnahmeöffnung queraxial, insbesondere senkrecht, zur Längsachse des Nutensteinbolzens verlaufend ist, wobei insbesondere die Länge der als Langloch ausgeführten Aufnahmeöffnung mindestens die einfache oder mindestens die zweifache Exzentrizität des Exzenterbolzens gegenüber der Drehachse der Exzenterwelle beträgt. Die Länge der als Langloch ausgeführten Aufnahmeöffnung ist an die Exzentrizität des Exzenterbolzens angepasst, wodurch die Bewegung des Exzenterbolzens keine Verkippung des Nutensteinbolzens bewirkt. Weiterhin ist die geometrische Form der Aufnahmeöffnung an die Geometrie des Exzentermechanismus angepasst. Ist die Drehung der Exzenterwelle für einen Winkelbereich von ungefähr 0° bis 180° ausgelegt, so ist insbesondere die daran angepasste Länge der als Langloch ausgeführten Aufnahmeöffnung die mindestens einfache Exzentrizität des Exzenterbolzens gegenüber der Rotationsachse der Exzenterwelle. Ist die Exzenterwelle für eine Drehung im Winkelbereich von 0° bis 360° ausgelegt, ist insbesondere die daran angepasste Länge der als Lanloch ausgeführten Aufnahmeöffnung mindestens die zweifache Exzentrizität des Exzenterbolzens.

Vorzugsweise zeichnet sich die Spannvorrichtung dadurch aus, dass die Exzenterwelle in einer Gleitlagerbuchse gelagert ist, wobei insbesondere die Gleitlagerbuchse aus Metall, insbesondere Messing, hergestellt ist. Eine Gleitlagerbuchse ermöglicht störungsfreien und komfortablen Betrieb der Exzenterwelle und der Spannvorrichtung. Insbesondere eine Gleitlagerbuchse hergestellt aus Messing unterstützt zuverlässig die radiale Lagerung der Exzenterwelle.

Vorzugsweise weist die Spannvorrichtung ein um eine Drehachse drehbares Betätigungswerkzeug für die Exzenterwelle zur Betätigung des Exzentermechanismus auf, wobei die Drehachse des Betätigungswerkzeugs kollinear mit der Drehachse der Exzenterwelle ausgerichtet ist. Mittels eines Betätigungswerkzeugs für die Exzenterwelle ist die Exzenterwelle einfach und zuverlässig zu betätigen. Das Betätigungswerkzeug ist insbesondere eine Betätigungsstange oder ein Steckschlüssel und/oder eine Knarre oder dergleichen. Insbesondere weisen die Exzenterwelle und das Betätigungswerkzeug jeweils eine form- und/oder eine funktionskomplementäre Kupplung auf. Die Kupplung dient der zuverlässigen Verbindung des Betätigungswerkzeugs mit der Exzenterwelle. Diese Kupplung ist insbesondere ein Innen- oder Außensechskantprofil oder ein Innen- oder Außenvierkantprofil.

Vorzugsweise ist die Spannvorrichtung dadurch gekennzeichnet, dass die Exzenterwelle in einem Exzentergehäuse zur Kopplung mit der Haltevorrichtung, insbesondere mit einem Schraubstock, angeordnet ist, wobei das Exzentergehäuse eine Führungsvorrichtung,

insbesondere eine Führungsnut oder eine Führungsrippe, zum Zusammenwirken mit einer form- und/oder funktionskomplementären Führungsvorrichtung der Haltevorrichtung, aufweist, wobei insbesondere das Exzentergehäuse in der Haltevorrichtung aufnehmbar oder aufgenommen ist und/oder wobei insbesondere das Exzentergehäuse gegenüber der Haltevorrichtung entlang der Führungsvorrichtung, insbesondere linear, bewegbar und/oder verschiebbar ist. In einer bevorzugten Ausführungsform ist das Exzentergehäuse gekoppelt mit der Haltevorrichtung. Insbesondere erfolgt diese Kopplung mittels Führungsvorrichtungen, die komplementär am Exzentergehäuse und der Haltevorrichtung angeordnet sind. Die Führungsvorrichtungen bewirken einerseits die Kopplung und andererseits, dass das Exzentergehäuse bewegbar, insbesondere linear und rotativ bewegbar, gegenüber der Haltevorrichtung ist. Eine solche Bewegung ermöglicht eine flexible Anordnung des fixierten Werkstücks auf dem Maschinentisch.

In einer bevorzugten Ausführungsform ist das Exzentergehäuse in die Haltevorrichtung aufnehmbar oder aufgenommen, wobei die Spannvorrichtung mit dem Exzentermechanismus in einem Adapterkörper angeordnet ist oder die Spannvorrichtung mit dem Exzentermechanismus als ein Adapterkörper ausgebildet ist. Vorzugweise besteht die Haltevorrichtung aus einem Schraubstock und dem Adapterkörper. Dabei weist insbesondere der Adapterkörper eine Führungsvorrichtung für eine Führungsvorrichtung des Exzentergehäuses auf. Auf diese Weise ist das Exzentergehäuse mit dem Adapterkörper koppelbar. In dieser Ausführungsform ist auf den Adapterkörper ein Schraubstock als Haltevorrichtung befestigbar, insbesondere aufschraubbar, so dass ein handelsüblicher Maschinenschraubstock mittels des Adapterkörpers mit dem Exzentergehäuse und damit mit dem Maschinentisch verspannt wird. In einer weiteren bevorzugten Ausführungsform ist das Exzentergehäuse, vorzugsweise direkt, mit einem Schraubstock als Haltevorrichtung gekoppelt, wobei insbesondere der Schraubstock eine entsprechende Führungsvorrichtung aufweist.

In einer bevorzugten Ausführungsform weist die Spannvorrichtung eine Haltevorrichtung auf, wobei die Haltevorrichtung mit dem Exzentermechanismus verbindbar oder verbunden ist. Vorzugsweise ist ein Werkstück direkt auf der Spannvorrichtung befestigbar.

Ferner wird die Aufgabe gelöst durch einen Maschinentisch einer Materialbearbeitungsmaschine mit einer vorangehend beschriebenen Spannvorrichtung und mindestens einer Nut, insbesondere einer T-Nut, zur Aufnahme des, insbesondere T-förmigen, Nutensteins der Spannvorrichtung, wobei insbesondere die mindestens eine Nut formkomplementär zu dem Nutenstein ausgebildet ist. Erfindungsgemäß ist der Nutenstein in der Nut bewegbar und/oder verspannbar. Mittels eines erfindungsgemäßen Maschinentischs einer Materialbearbeitungsmaschine mit einer Spannvorrichtung ist es möglich, ein Werkstück in einer Materialbearbeitungsmaschine sicher festzuspannen und zu bearbeiten. Zur Vermeidung von Wiederholungen wird auf die obige Beschreibung der Spannvorrichtung ausdrücklich verwiesen.

Des Weiteren wird die Aufgabe gelöst durch die Verwendung einer vorangehend beschriebenen Spannvorrichtung zum Befestigen einer beweglichen Haltevorrichtung, insbesondere eines Schraubstocks, an einem eine Nut, insbesondere eine T-Nut, aufweisenden Maschinentisch einer Materialbearbeitungsmaschine. Zur Vermeidung von Wiederholungen wird auf die obige Beschreibung der Spannvorrichtung ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische, perspektivische Ansicht eines Ausführungsbeispiels einer Spannvorrichtung,
- Fig. 2: eine schematische Querschnittsdarstellung der Spannvorrichtung aus Fig. 1 mit einem eine Nut aufweisenden Maschinentisch,
- Fig. 3: eine andere schematische Querschnittsdarstellung der Spannvorrichtung aus Fig. 1,
- Fig. 4: drei schematische Querschnittsdarstellungen mit unterschiedlichen Positionen des Exzentermechanismus und
- Fig. 5: schematische Detail-Querschnittsdarstellung eines weiteren Ausführungsbeispiels des Exzentermechanismus.
In den Zeichnungen sind jeweils gleiche oder gleichartige Elemente und/oder Teile mit denselben Bezugsziffern versehen, so dass von einer erneuten Vorstellung jeweils abgesehen wird.

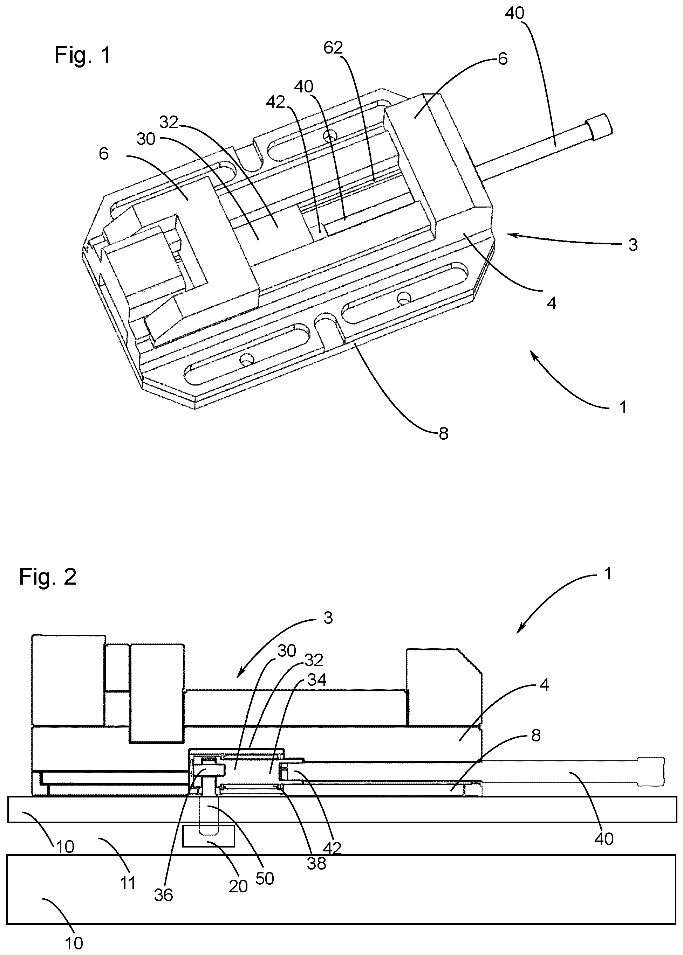

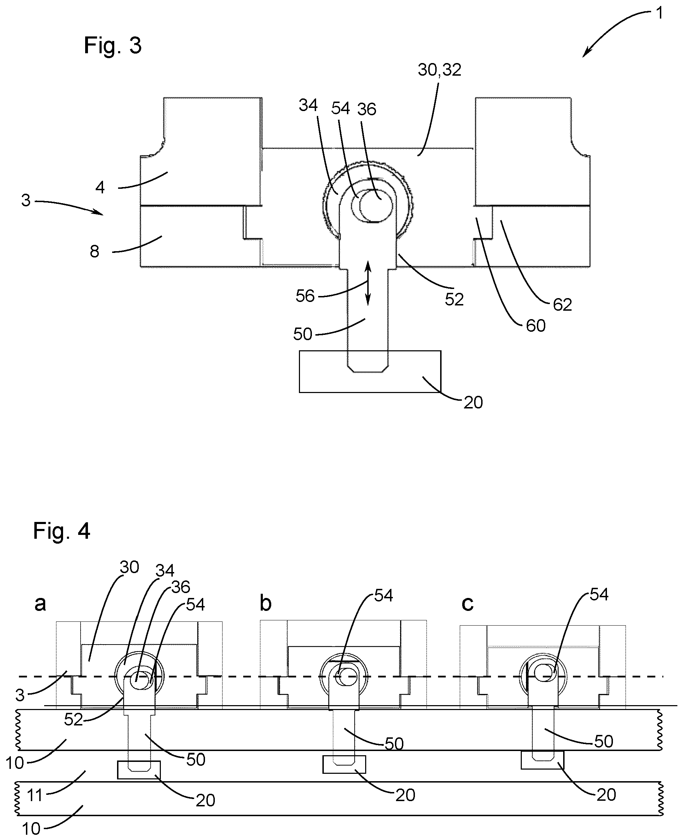

Fig. 1 zeigt eine schematische, perspektivische Ansicht eines Ausführungsbeispiels einer Spannvorrichtung 1 auf einem nicht dargestellten Maschinentisch 10 (vgl. Fig. 2 und Fig. 4). Die Haltevorrichtung 3 ist in diesem Ausführungsbeispiel als Schraubstock 4 mit einem Adapterkörper 8 ausgebildet. Der Schraubstock 4 weist zwei Klemmbacken 6 auf und ist auf dem Adapterkörper 8 angeordnet. Weiterhin weist die Haltevorrichtung eine Führungsvorrichtung 62 auf, mittels dieser ein Exzentergehäuse 32 mit der Haltevorrichtung 3 gekoppelt ist. Das Exzentergehäuse 32 enthält den Exzentermechanismus 30. An einem Ende des Exzentergehäuses 32 ist eine Kupplung 42 angeordnet, wobei die Kupplung mit einem Betätigungswerkzeug 40 verbunden ist. Bei einer Drehung des Betätigungswerkzeugs 40 wird die Spannvorrichtung 1 mit dem Maschinentisch 10 verspannt bzw. die Spannverbindung gelöst.

In Fig. 2 ist eine schematische Querschnittsdarstellung entlang der Längsrichtung der Spannvorrichtung 1 aus Fig. 1 dargestellt. Die Haltevorrichtung 3, bestehend aus dem Schraubstock 4 und dem Adapterkörper 8, ist mit dem im Exzentergehäuse 32 befindlichen Exzentermechanismus 30 verbunden. Der Exzentermechanismus 30 weist eine Exzenterwelle 34, welche in einer Gleitlagerbuchse 38 angeordnet ist, auf. Der Exzenterbolzen 36 ist mit der Exzenterwelle 34 und mit einem Nutensteinbolzen 50 verbunden. Der Nutensteinbolzen 50 ist ebenfalls mit dem Nutenstein 20 verbunden. Der Nutenstein 20 ist in einer Nut 11 des Maschinentischs 10 angeordnet. Der Maschinentisch 10 ist vorzugsweise Bestandteil einer Materialbearbeitungsmaschine, beispielsweise einer Werkzeugmaschine. Bei einer Betätigung der Exzenterwelle 34 wird der Nutensteinbolzen 50 zusammen mit dem damit verbundenen Nutenstein 20 in der Nut 11 nach oben bewegt und dadurch verklemmt. Die Exzenterwelle 34 wird mittels des Betätigungswerkzeugs 40, welches mittels einer Kupplung 42 mit der Exzenterwelle verbunden ist, betätigt.

In einer anderen Ausgestaltung sind die Nut 11 des Maschinentischs 10 nicht parallel, insbesondere um 90° gedreht, zur Führungsvorrichtung 62 der Spannvorrichtung 1 angeordnet.

In. Fig. 3 ist eine schematische Querschnittsdarstellung entlang der Querrichtung der Spannvorrichtung 1 aus Fig. 1 abgebildet. Die Haltevorrichtung 3, ausgebildet als Schraubstock 4 mit Adapterkörper 8, ist mittels der als Führungsrippe ausgebildeten Führungsvorrichtung 60 des Exzentergehäuses 32 und der als Führungsnut ausgebildeten Führungsvorrichtung 62 der Haltevorrichtung 3 gekoppelt. Der Exzentermechanismus 30 ist im Exzentergehäuse 32 dargestellt.

Die Exzenterwelle 34 weist einen exzentrisch angeordneten Exzenterbolzen 36 auf, wobei auf den Exzenterbolzen 36 mittels einer Aufnahmeöffnung 54 für den Exzenterbolzen 36, welche als Langloch ausgebildet ist, der Nutensteinbolzen 50 auf den Exzenterbolzen 36 aufgeschoben ist. Die Längserstreckung der Aufnahmeöffnung 54 verläuft senkrecht zur Längsachse 56 des Nutensteinbolzens 50. Eine Drehung der Exzenterwelle 34 bewirkt eine Änderung der Position des Exzenterbolzens 36 und verschiebt den Nutensteinbolzen 50 in der Bildebene nach oben oder unten. Die Axialführung 52 bewirkt zusammen mit der als Langloch ausgebildeten Aufnahmeöffnung 54, dass der Nutensteinbolzen 50 unabhängig von der Position des Exzenterbolzens 36 senkrecht gegenüber dem Maschinentisch 10 bzw. der Unterseite der Haltevorrichtung 3 geführt wird.

Fig. 4 zeigt drei schematische Querschnittsdarstellungen a, b, c mit unterschiedlichen Positionen des Exzentermechanismus 30. In Fig. 4b ist die Position der Exzenterwelle 34 aus Fig. 3 dargestellt. Am Nutensteinbolzen 50 und dessen Position gegenüber der Nut 11 im Maschinentisch 10 ist zu erkennen, dass diese Position einer mittleren Höhe des Nutensteins 20 in der Nut 11 entspricht. Dies ist ebenfalls an der gestrichelten Linie erkennbar, welche zur Veranschaulichung durch die Drehachse 35 der Exzenterwelle 34 verlaufend dargestellt ist.

In Fig. 4a ist der Exzenterbolzen 36 nach unten gedreht, sodass sich der Exzenterbolzen 36 links in der als Langloch ausgebildeten Aufnahmeöffnung 54 befindet und der Nutensteinbolzen 50 einschließlich des Nutensteins 20 die tiefste Position einnimmt.

In Fig. 4b ist die Exzenterwelle 34 um 90 Grad gegenüber der Position in Fig. 4a gedreht, was an der schwarz dargestellten Markierung der Exzenterwelle 34 erkennbar ist. Der Exzenterbolzen 36 befindet sich rechts in der Aufnahmeöffnung 54 und der Nutensteinbolzen 50 auf mittlerer Höhe.

In Fig. 4c ist eine Position der Exzenterwelle 34 dargestellt, in der der Exzenterbolzen 36 die höchste Position einnimmt und dabei links in der Aufnahmeöffnung 54 angeordnet ist. Der Nutenstein 20, welcher mittels des Nutensteinbolzens 50 mit dem Exzenterbolzen 36 verbunden ist, ist in der Nut 11 nach oben gezogen und der Nutenstein 20 ist in der Nut 11 verspannt.

In diesem Ausführungsbeispiel weist die Aufnahmeöffnung 54 eine Länge von einer Exzentrizität des Exzenterbolzens 36 auf. Die Axialführung 52 bewirkt, dass in jeder Position der Exzenterwelle 34 der Nutensteinbolzen linear geführt und senkrecht gegenüber dem Maschinentisch bewegt wird.

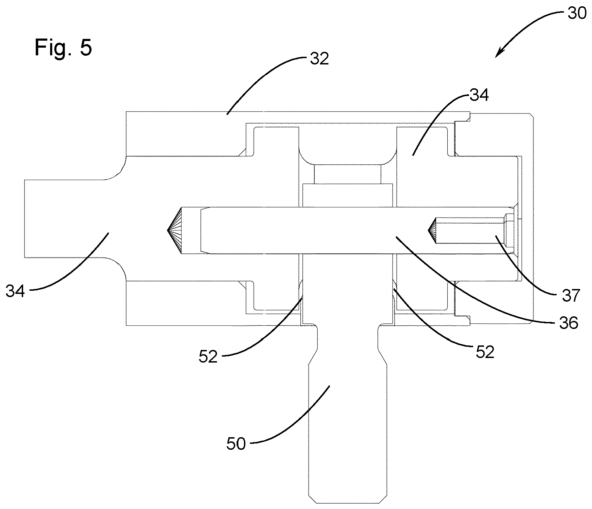

Fig. 5 zeigt eine schematische Detail-Querschnittsdarstellung eines weiteren Ausführungsbeispiels des Exzentermechanismus 30. Der Exzentermechanismus 30 ist in einem Exzentergehäuse 32 angeordnet, wobei das Exzentergehäuse 32 eine um eine Drehachse drehbare Exzenterwelle 34 und einen Exzenterbolzen 36 aufweist. Der Exzenterbolzen 36 ist in diesem Ausführungsbeispiel mittels eines Exzenterstifts 37 mit der Exzenterwelle 34 verbunden. Der Exzenterstift 37 sowie die Längsachse des Exzenterbolzens 36 sind hierbei exzentrisch zur Drehachse der Exzenterwelle 34 angeordnet. Der Exzenterbolzen 36 ist in der Exzenterwelle 34 angeordnet. Der Exzenterbolzen 36 ist mit dem Nutensteinbolzen 50 verbunden, wobei der Nutensteinbolzen 50 zwischen zwei Teilen der Exzenterwelle 34 angeordnet ist. Nicht dargestellt zur linken Seite ist die Kupplung 42 und das Bestätigungswerkzeug 40 zur Betätigung der Exzenterwelle 34. Ebenfalls nicht dargestellt ist der am Nutensteinbolzen 50 befestigbare Nutenstein 20. Der Nutensteinbolzen 50 ist mittels einer Axialführung 52 linear geführt.

### Bezugszeichenliste

- 1: Spannvorrichtung
- 3: Haltevorrichtung
- 4: Schraubstock
- 6: Klemmbacke
- 8: Adapterkörper
- 10: Maschinentisch
- 11: Nut
- 20: Nutenstein
- 30: Exzentermechanismus
- 32: Exzentergehäuse
- 34: Exzenterwelle
- 35: Drehachse
- 36: Exzenterbolzen
- 37: Exzenterstift
- 38: Gleitlagerbuchse
- 40: Betätigungswerkzeug
- 42: Kupplung
- 50: Nutensteinbolzen
- 52: Axialführung
- 54: Aufnahmeöffnung
- 56: Längsachse
- 60: Führungsvorrichtung
- 62: Führungsvorrichtung

## Patentansprüche

1. Spannvorrichtung (1) zur Befestigung einer bewegbaren Haltevorrichtung (3), insbesondere eines Schraubstocks (4), an einem eine Nut (11), insbesondere eine T-Nut, aufweisenden Maschinentisch (10) einer Materialbearbeitungsmaschine mit einem, insbesondere T-förmigen, Nutenstein (20) zur Anordnung in der Nut (11), insbesondere der T-Nut, des Maschinentischs (10) und mit einem Exzentermechanismus (30) zum Verspannen des Nutensteins (20), wobei bei Betätigung des Exzentermechanismus (30) der Nutenstein (20) in der Nut (11), insbesondere der T-Nut, bewegbar und/oder verspannbar ist,
wobei der Exzentermechanismus (30) eine eine Drehachse (35) aufweisende Exzenterwelle (34) und einen an der Exzenterwelle (34) exzentrisch angeordneten Exzenterbolzen (36) aufweist, wobei der Nutenstein (20) mittels einer Drehbewegung der Exzenterwelle (34) in der Nut (11), insbesondere T-Nut, verspannbar ist,
wobei die Spannvorrichtung (1) einen mit dem Nutenstein (20) und mit dem Exzenterbolzen (36) verbundenen Nutensteinbolzen (50) zum Bewegen und Verspannen des Nutensteins (20) aufweist, wobei mittels einer Drehbewegung der Exzenterwelle (34) der Nutensteinbolzen (50) queraxial zur Drehachse (35) der Exzenterwelle (34) bewegbar ist,
wobei der Exzentermechanismus (30) eine zwangsgeführte Axialführung (52) für den Nutensteinbolzen (50) aufweist und der Nutensteinbolzen (50) durch die Axialführung (52) linear geführt ist, wobei die Axialführung (52) queraxial zur Drehachse (35) der Exzenterwelle (34) ausgebildet ist,
wobei der Nutensteinbolzen (50) eine Aufnahmeöffnung (54) zur Aufnahme des Exzenterbolzens (36) aufweist, wobei die Aufnahmeöffnung (54) als Langloch mit Längserstreckung ausgeführt ist,
wobei der Nutensteinbolzen (50) eine Längsachse (56) aufweist, wobei die Längserstreckung der Aufnahmeöffnung (54) queraxial, insbesondere senkrecht, zur Längsachse (56) des Nutensteinbolzens (50) verlaufend ist.

2. Spannvorrichtung (1) nach Anspruch 1, **dadurch gekennzeichnet, dass** die Exzenterwelle (34) gegenüber einem nicht verspannten Zustand in einem Winkelbereich von 0° bis 360°, insbesondere in einem Winkelbereich von 0° bis 200°, insbesondere in einem Winkelbereich von 0° bis 180°, drehbar ist.

3. Spannvorrichtung (1) nach Anspruch 1 oder 2, **dadurch gekennzeichnet, dass** durch eine Drehbewegung der Exzenterwelle (34) gegenüber einem nicht verspannten Zustand um 80° bis 200°, insbesondere um 90° bis 180°, der Nutenstein (20) verspannbar ist.

4. Spannvorrichtung (1) nach einem der Ansprüche 1 bis 3, **dadurch gekennzeichnet, dass** der Exzenterbolzen (36) eine Exzentrizität gegenüber der Drehachse (35) der Exzenterwelle (34) zwischen 0.2 mm und 6 mm, insbesondere zwischen 0.5 mm und 4 mm, aufweist.

5. Spannvorrichtung (1) nach einem der Ansprüche 1 bis 4, **dadurch gekennzeichnet, dass** der Nutenstein (20) und/oder der Nutensteinbolzen (50) und/oder der Exzentermechanismus (30) aus Metall, insbesondere Stahl, insbesondere gehärtetem Stahl, hergestellt sind.

6. Spannvorrichtung (1) nach einem der Ansprüche 1 bis 5, **dadurch gekennzeichnet, dass** die Länge der als Langloch ausgeführten Aufnahmeöffnung (54) mindestens die einfache oder mindestens die zweifache Exzentrizität des Exzenterbolzens (36) gegenüber der Drehachse (35) der Exzenterwelle (36) beträgt.

7. Spannvorrichtung (1) nach einem der Ansprüche 1 bis 6, **dadurch gekennzeichnet, dass** die Exzenterwelle (34) in einer Gleitlagerbuchse (38) gelagert ist, wobei insbesondere die Gleitlagerbuchse (38) aus Metall, insbesondere Messing, hergestellt ist.

8. Spannvorrichtung (1) nach einem der Ansprüche 1 bis 7, **dadurch gekennzeichnet, dass** die Spannvorrichtung (1) ein um eine Drehachse drehbares Betätigungswerkzeug (40) für die Exzenterwelle (34) zur Betätigung des Exzentermechanismus (30) aufweist, wobei die Drehachse des Betätigungswerkzeugs kollinear mit der Drehachse (35) der Exzenterwelle (34) ausgerichtet ist.

9. Spannvorrichtung (1) nach einem der Ansprüche 1 bis 8 **dadurch gekennzeichnet, dass** die Exzenterwelle (34) in einem Exzentergehäuse (32) zur Kopplung mit der Haltevorrichtung (3), insbesondere mit einem Schraubstock (4), angeordnet ist, wobei das Exzentergehäuse (32) eine Führungsvorrichtung (60), insbesondere eine Führungsnut oder eine Führungsrippe, zum Zusammenwirken mit einer form- und/oder funktionskomplementären Führungsvorrichtung (62) der Haltevorrichtung (3), aufweist, wobei insbesondere das Exzentergehäuse (32) in der Haltevorrichtung (3) aufnehmbar oder aufgenommen ist und/oder wobei insbesondere das Exzentergehäuse (32) gegenüber der Haltevorrichtung (3) entlang der Führungsvorrichtung (60), insbesondere linear, bewegbar und/oder verschiebbar ist.

10. Maschinentisch einer Materialbearbeitungsmaschine mit einer Spannvorrichtung (1) nach einem der Ansprüche 1 bis 9 und mindestens einer Nut (11), insbesondere einer T-Nut, zur Aufnahme des, insbesondere T-förmigen, Nutensteins (20) der Spannvorrichtung (1), wobei insbesondere die mindestens eine Nut (11) formkomplementär zu dem Nutenstein (20) ausgebildet ist.

11. Verwendung einer Spannvorrichtung (1) nach einem der Ansprüche 1 bis 9 zum Befestigen einer beweglichen Haltevorrichtung (3), insbesondere eines Schraubstocks (4), an einem eine Nut (11), insbesondere eine T-Nut, aufweisenden Maschinentisch (10) einer Materialbearbeitungsmaschine.

## Claims

1. A clamping device (1) for fixing a movable holding device (3), in particular a vise (4), to a machine table (10) of a material processing machine having a slot (11), in particular a T-slot, with a, in particular T-shaped, slot nut (20) for arrangement in the slot (11), in particular the T-slot, of the machine table (10) and with an eccentric mechanism (30) for clamping the slot nut (20), wherein when the eccentric mechanism (30) is actuated, the slot nut (20) can be moved and/or clamped in the slot (11), in particular the T-slot,
wherein the eccentric mechanism (30) has an eccentric shaft (34) having an axis of rotation (35) and an eccentric bolt (36) eccentrically arranged on the eccentric shaft (34), wherein the slot nut (20) can be clamped in the slot (11), in particular T-slot, by means of a rotational movement of the eccentric shaft (34),
wherein the clamping device (1) has a slot nut bolt (50) connected to the slot nut (20) and to the eccentric bolt (36) for moving and clamping the slot nut (20), wherein the slot nut bolt (50) can be moved transversely axially to the axis of rotation (35) of the eccentric shaft (34) by means of a rotational movement of the eccentric shaft (34),
wherein the eccentric mechanism (30) has a forcibly guided axial guide (52) for the slot nut bolt (50) and the slot nut bolt (50) is linearly guided through the axial guide (52), wherein the axial guide (52) is configured transversely axially to the axis of rotation (35) of the eccentric shaft (34),
wherein the slot nut bolt (50) has a receiving opening (54) for receiving the eccentric bolt (36), wherein the receiving opening (54) is designed as an elongated hole with a longitudinal extension,
wherein the slot nut bolt (50) has a longitudinal axis (56), wherein the longitudinal extension of the receiving opening (54) runs transversely axially, in particular perpendicularly, to the longitudinal axis (56) of the slot nut bolt (50).

2. The clamping device (1) according to Claim 1, **characterized in that** the eccentric shaft (34) can be rotated in an angular range of 0° to 360°, in particular in an angular range of 0° to 200°, in particular in an angular range of 0° to 180°, with respect to a non-clamped state.

3. The clamping device (1) according to Claim 1 or 2, **characterized in that** the slot nut (20) can be clamped by a rotational movement of the eccentric shaft (34) by 80° to 200°, in particular by 90° to 180°, with respect to a non-clamped state.

4. The clamping device (1) according to any one of Claims 1 to 3, **characterized in that** the eccentric bolt (36) has an eccentricity with respect to the axis of rotation (35) of the eccentric shaft (34) between 0.2 mm and 6 mm, in particular between 0.5 mm and 4 mm.

5. The clamping device (1) according to any one of Claims 1 to 4, **characterized in that** the slot nut (20) and/or the slot nut bolt (50) and/or the eccentric mechanism (30) are manufactured from metal, in particular steel, in particular hardened steel.

6. The clamping device (1) according to any one of Claims 1 to 5, **characterized in that** the length of the receiving opening (54) designed as an elongated hole is at least once or at least twice the eccentricity of the eccentric bolt (36) with respect to the axis of rotation (35) of the eccentric shaft (36).

7. The clamping device (1) according to any one of Claims 1 to 6, **characterized in that** the eccentric shaft (34) is mounted in a plain bearing bush (38), wherein the plain bearing bush (38) is in particular manufactured from metal, in particular brass.

8. The clamping device (1) according to any one of Claims 1 to 7, **characterized in that** the clamping device (1) has an actuating tool (40) which can be rotated about an axis of rotation for the eccentric shaft (34) for actuating the eccentric mechanism (30), wherein the axis of rotation of the actuating tool is aligned col-linearly with the axis of rotation (35) of the eccentric shaft (34).

9. The clamping device (1) according to any one of Claims 1 to 8, **characterized in that** the eccentric shaft (34) is arranged in an eccentric housing (32) for coupling to the holding device (3), in particular to a vise (4), wherein the eccentric housing (32) has a guide device (60), in particular a guide slot or a guide rib, for cooperating with a guide device (62), which is complementary in shape and/or function, of the holding device (3), wherein the eccentric housing (32) can be received or is received, in particular, in the holding device (3) and/or wherein the eccentric housing (32) is in particular movable and/or displaceable with respect to the holding device (3) along the guide device (60), in particular linearly.

10. A machine table of a material processing machine having a clamping device (1) according to any one of Claims 1 to 9 and at least one slot (11), in particular a T-slot, for receiving the, in particular T-shaped, slot nut (20) of the clamping device (1), wherein the at least one slot (11) is in particular configured to be complementary in shape to the slot nut (20).

11. Use of a clamping device (1) according to any one of Claims 1 to 9 for fixing a movable holding device (3), in particular a vise (4), to a machine table (10) of a material processing machine having a slot (11), in particular a T-slot.

## Revendications

1. Dispositif de serrage (1) pour fixer un dispositif de maintien mobile (3), en particulier un étau (4), sur une table de machine (10) d'une machine de traitement de matériaux, présentant une rainure (11), en particulier une rainure en T, comprenant un coulisseau (20) notamment en forme de T, pour une mise en place dans la rainure (11), en particulier en T, de la table de machine (10), et comprenant un mécanisme à excentrique (30) pour serrer le coulisseau (20), le coulisseau (20) étant apte à être déplacé et/ou apte à être serré dans la rainure (11), en particulier en T, lors de l'actionnement du mécanisme à excentrique (30),
le mécanisme à excentrique (30) comprenant un arbre excentrique (34), présentant un axe de rotation (35), et un tourillon excentrique (36), agencé de manière excentrique sur l'arbre excentrique (34), le coulisseau (20) étant apte à être serré dans la rainure (11), notamment en T, au moyen d'un mouvement de rotation de l'arbre excentrique (34),
le dispositif de serrage (1) comprenant un goujon (50) de coulisseau relié au coulisseau (20) et au tourillon excentrique (36) pour déplacer et serrer le coulisseau (20), le goujon (50) de coulisseau étant, au moyen d'un mouvement de rotation de l'arbre excentrique (34), apte à être déplacé transversalement à l'axe de rotation (35) de l'arbre excentrique (34),
le mécanisme à excentrique (30) présentant un guidage axial (52) à guidage forcé pour le goujon (50) de coulisseau, et le goujon (50) de coulisseau étant guidé linéairement par le guidage axial (52), le guidage axial (52) étant réalisé transversalement à l'axe de rotation (35) de l'arbre excentrique (34),
le goujon (50) de coulisseau présentant une ouverture de réception (54) pour recevoir le tourillon excentrique (36), l'ouverture de réception (54) étant réalisée sous la forme d'un trou oblong s'étendant longitudinalement,
le goujon (50) de coulisseau présentant un axe longitudinal (56), l'extension longitudinale de l'ouverture de réception (54) s'étendant transversalement, en particulier perpendiculairement, à l'axe longitudinal (56) du goujon (50) de coulisseau.

2. Dispositif de serrage (1) selon la revendication 1, **caractérisé en ce que** l'arbre excentrique (34) est apte à tourner dans une gamme angulaire allant de 0° à 360°, en particulier dans une gamme angulaire allant de 0° à 200°, en particulier dans une gamme angulaire allant de 0° à 180°, par rapport à un état non serré.

3. Dispositif de serrage (1) selon la revendication 1 ou la revendication 2, **caractérisé en ce que** le coulisseau (20) est apte à être serré par un mouvement de rotation de l'arbre excentrique (34), par rapport à un état non serré, allant de 80° à 200°, en particulier allant de 90° à 180°.

4. Dispositif de serrage (1) selon l'une des revendications 1 à 3, **caractérisé en ce que** le tourillon excentrique (36) présente, par rapport à l'axe de rotation (35) de l'arbre excentrique (34), une excentricité comprise entre 0,2mm et 6mm, en particulier entre 0,5mm et 4mm.

5. Dispositif de serrage (1) selon l'une des revendications 1 à 4, **caractérisé en ce que** le coulisseau (20) et/ou le goujon (50) de coulisseau et/ou le mécanisme à excentrique (30) sont fabriqués en métal, en particulier en acier, en particulier en acier trempé.

6. Dispositif de serrage (1) selon l'une des revendications 1 à 5, **caractérisé en ce que** la longueur de l'ouverture de réception (54) réalisée sous forme de trou oblong est au moins égale à l'excentricité simple ou au moins double du tourillon excentrique (36) par rapport à l'axe de rotation (35) de l'arbre excentrique (36).

7. Dispositif de serrage (1) selon l'une des revendications 1 à 6, **caractérisé en ce que** l'arbre excentrique (34) est monté dans une douille lisse (38) formant palier, la douille lisse (38) formant palier étant notamment fabriquée en métal, en particulier en laiton.

8. Dispositif de serrage (1) selon l'une des revendications 1 à 7, **caractérisé en ce que** le dispositif de serrage (1) comprend un outil d'actionnement (40) apte à tourner autour d'un axe de rotation pour l'arbre excentrique (34) afin d'actionner le mécanisme à excentrique (30), l'axe de rotation de l'outil d'actionnement étant aligné de manière colinéaire avec l'axe de rotation (35) de l'arbre excentrique (34).

9. Dispositif de serrage (1) selon l'une des revendications 1 à 8, **caractérisé en ce que** l'arbre excentrique (34) est agencé dans un boîtier d'excentrique (32) afin d'être relié au dispositif de maintien (3), en particulier avec un étau (4), le boîtier d'excentrique (32) présentant un dispositif de guidage (60), en particulier une rainure de guidage ou une nervure de guidage, destiné à coopérer avec un dispositif de guidage (62) de forme et/ou de fonction complémentaire du dispositif de maintien (3), le boîtier d'excentrique (32) étant apte à être logé ou étant logé dans le dispositif de maintien (3)), et/ou le boîtier d'excentrique (32) étant notamment apte à être déplacé et/ou coulissé par rapport au dispositif de maintien (3) le long du dispositif de guidage (60), en particulier de manière linéaire.

10. Table de machine d'une machine de traitement de matériaux avec un dispositif de serrage (1) selon l'une des revendications 1 à 9 et au moins une rainure (11), en particulier une rainure en T, pour recevoir le coulisseau (20), en particulier en forme de T, du dispositif de serrage (1), ladite au moins une rainure (11) étant notamment conçue de manière complémentaire à la forme du coulisseau (20).

11. Utilisation d'un dispositif de serrage (1) selon l'une des revendications 1 à 9 pour fixer un dispositif de maintien mobile (3), en particulier un étau (4), sur une table de machine (10) d'une machine de traitement de matériaux, présentant une rainure (11), en particulier une rainure en T.
